Europäisches Patentamt

European Patent Office

Office européen des brevets

(11) Veröffentlichungsnummer: **0 485 879 A2**

# EUROPÄISCHE PATENTANMELDUNG

(21) Anmeldenummer: **91118896.9**

(51) Int. Cl.5: **G01S 15/87**, G01S 15/93

(22) Anmeldetag: **06.11.91**

(30) Priorität: **13.11.90 DE 4036022**

(43) Veröffentlichungstag der Anmeldung:
**20.05.92 Patentblatt 92/21**

(84) Benannte Vertragsstaaten:
**DE FR GB NL**

(71) Anmelder: **ROBERT BOSCH GMBH**
**Postfach 30 02 20**
**W-7000 Stuttgart 30(DE)**

(72) Erfinder: **Rapps, Peter**
**Am Pfinztor 11**
**W-7500 Karlsruhe 41(DE)**
Erfinder: **Noll, Martin, Dipl.-Phys.**
**Oberdorf 4**
**W-6446 Nentershausen(DE)**
Erfinder: **Petry, Klaus, Dipl.-Ing.**
**Heckenrosenweg 24**
**W-7500 Karlsruhe 31(DE)**

(54) Verfahren und Ortungseinrichtung zur Ortung von Fahrzeugen fahrerloser Transportsysteme.

(57) Es wird ein Verfahren und eine Ortungseinrichtung zur Ortung von Fahrzeugen fahrerloser Transportsysteme beschrieben.

Zwischen zu ortenden Fahrzeugen und wenigstens zwei ortsfesten Einrichtungen werden Ubertragungsstrecken für Ultraschall-Signale gebildet. Deren Laufzeiten werden mittels Auswerteschaltungen gemessen. Aus den Laufzeiten ergeben sich die Abstände zwischen den Fahrzeugen und den ortsfesten Einrichtungen und daraus wiederum die Ortskoordinaten des aktuellen Standorts des jeweiligen Fahrzeugs.

FIG.1

Die Erfindung betrifft ein Verfahren zur Ortung von Fahrzeugen fahrerloser Transportsysteme nach dem Oberbegriff des Anspruchs 1.

Fahrerlose Transportsysteme werden beispielsweise in Fertigungs- oder Lagerhallen eingesetzt. Sie bedürfen einer ständigen Ortung des Fahrzeugs bzw der Fahrzeuge, um die vorgeschriebene Bahn sicher einhalten zu können.

Übliche Verfahren bedienen sich zur Ortung in den Boden eingelassener Leitkabel oder anderer aufwendiger ortsfester Einrichtungen für die laufende Erfassung, sowie neuerdings verstärkt des Einsatzes bildverarbeitender Verfahren. Nachteil dieser Verfahren sind die hohen Kosten bzw. geringe Flexibilität gegenüber Bahnänderungen, z.B. beim Leitkabel.

Außerdem ist - allerdings aus dem Straßenverkehr - eine Abstandsmessung bekannt, bei der zur Abstandsbestimmung eines vorausfahrenden Fahrzeugs passive oder aktive Meßverfahren angewandt werden. Diese beruhen auf der Aussendung und Laufzeitmessung von Ultraschall-Signalen. Bei einem aktiven Meßverfahren mit einem Infrarot/Ultraschall-Transponder wird von einem ersten Fahrzeug aus ein Infrarot-Signal als Startsignal ausgesendet, das bei einem zweiten Fahrzeug die Aussendung eines Ultraschall-Signals veranlaßt. Aus der verstrichenen Zeit zwischen der Aussendung des Infrarot-Signals und dem Empfang des Ultraschall-Signals kann dann der Abstand des ersten Fahrzeugs vom zweiten ermittelt werden. Dabei wird natürlich die Laufzeit des Infrarot-Signals gleich Null gesetzt.

Dieses Verfahren setzt allerdings eine vergleichsweise eng definierte Ausrichtung der Fahrzeuge zueinander voraus und ermöglicht nur die Messung des Abstandes zwischen den Fahrzeugen, aber nicht deren räumliche Position.

Der Erfindung liegt die Aufgabe zugrunde, ein Verfahren zur Ortung von Fahrzeugen fahrerloser Transportsysteme zu schaffen, das auch bei vorhandenen Transportsystemen leicht installierbar ist und eine flexible Bahnführung und Änderung des Bahnverlaufs der Fahrzeuge ermöglicht.

Diese Aufgabe wird bei einem Verfahren nach dem Oberbegriff des Anspruchs 1 durch die im Kennzeichen angegebenen Merkmale gelöst.

Ein Grundgedanke der Erfindung beruht darauf, eine drahtlose Abstandsmesssung zwischen dem oder den einzelnen Fahrzeug(en), deren absolute Position bestimmt werden soll, und ortsfesten, lediglich punktuell angeordneten Einrichtungen zu schaffen. Ist aufgrund dieser Messung der Abstand zu zwei räumlich getrennten ortsfesten Einrichtungen bekannt, so kann unter der Einschränkung einer geradlinigen Bahn des Fahrzeugs oder der Fahrzeuge die absolute Position eindeutig bestimmt werden. Bei beliebig verlaufenden Bahnen sind jedoch mindestens drei ortsfeste Einrichtungen erforderlich.

Bei der drahtlosen Abstandsmessung wird vorausgesetzt, daß der kürzeste Abstand zwischen zwei Objekten gemessen wird, Reflexionen also ausgeschlossen oder nicht berücksichtigt werden.

Zur drahtlosen Abstandsmessung eignen sich Ultraschall-Signale, die eine für die Verarbeitungsgeschwindigkeit der Signale günstige Ausbreitungsgeschwindigkeit besitzen. Werden die Ultraschall-Signale zu einer vorgegebenen Zeit übertragen, so kann die verstrichene Zeit zwischen der Aussendung und dem Empfang leicht ermittelt werden.

Der Zeitpunkt der Übertragung kann dadurch festgelegt werden, daß elektromagnetische Startsignale übertragen werden, die entweder die Aussendung der Ultraschall-Signale veranlassen oder ankündigen. Dabei wird die Tatsache ausgenutzt, daß derartige Signale im Vergleich zu Ultraschall-Signalen eine vernachlässigbare kurze Laufzeit besitzen, die die Meßgenaulgkeit aufgrund der Laufzeit der Ultraschall-Signale praktisch nicht beeinträchtigt.

Entsprechende Einrichtungen zur Aussendung von Ultraschall-Signalen und elektromagnetischen Signalen können ohne größeren baulichen Aufwand installiert werden. Eine Änderung der abzufahrenden Bahnkurven ist bei einmal installierten Einrichtungen lediglich durch Änderung der Programmierung möglich und erfordert keine baulichen Änderungen, wodurch sich das Verfahren sehr flexibel geänderten Einsatzbedingungen anpassen läßt.

Die Erfindung betrifft ferner eine Ortungseinrichtung für Fahrzeuge fahrerloser Transportsysteme nach dem Oberbegriff des Anspruchs 1.

Diesbezüglich liegt ihr die Aufgabe zugrunde, eine Ortungseinrichtung für Fahrzeuge fahrerloser Transportsysteme zu schaffen, die auch bei vorhandenen Transportsystemen leicht installierbar ist und eine flexible Bahnführung und Änderung des Bahnverlaufs der Fahrzeuge ermöglicht.

Diese Aufgabe wird bei einer Ortungseinrichtung nach dem Oberbegriff des Anspruchs 11 durch die im Kennzeichen angegebenen Merkmale gelöst.

Weiterbildungen und vorteilhafte Ausgestaltungen der Erfindung ergeben sich aus den Ansprüchen, der weiteren Beschreibung und der Zeichnung, anhand der die Erfindung näher erläutert wird.

In der Zeichnung zeigen:

Fig. 1  eine Skizze eines mehrere Fahrzeuge umfassenden fahrerlosen Transportsystems mit einer Ortungseinrichtung in einer Fertigungs- oder Lagerhalle,

Fig. 2    ein Blockschaltbild der in Fig. 1 dargestellten Ortungseinrichtung.

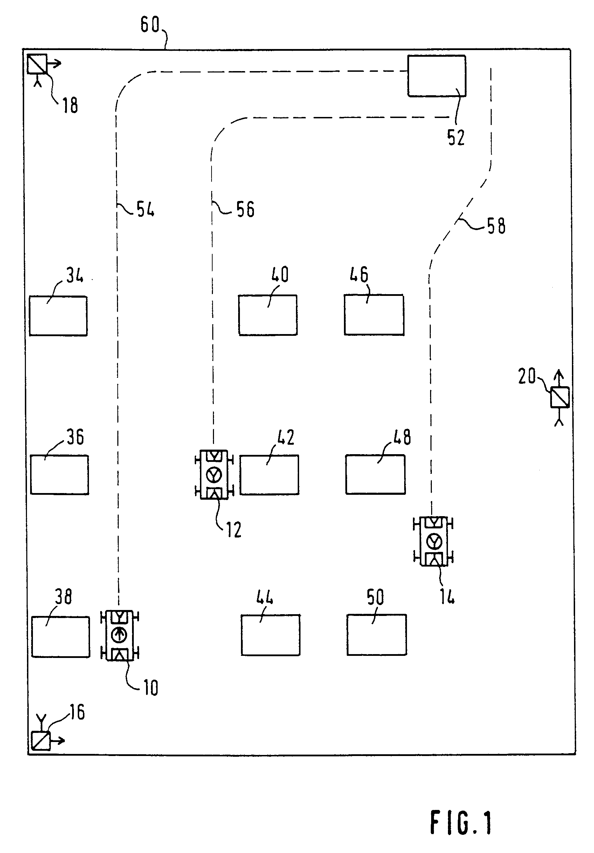

In Fig. 1 ist eine Ortungseinrichtung für ein mehrere Fahrzeuge umfassendes fahrerloses Transportsystem dargestellt. Das Transportsystem dient hier z. B. dazu, in einer Lagerhalle 60 gelagerte Güter von Stationen 34, 36, 38; 40, 42, 44; 46, 48, 50 mittels Fahrzeugen 10, 12, 14 zu einer Station 52 zu transportieren.

Die Fahrzeuge sind mit Steuerungsvorrichtungen ausgestattet, die es ermöglichen, sie entlang von Bahnverläufen 54, 56, 58 zu bewegen und an den Stationen 34, 36, 38; 40, 42, 44; 46, 48, 50 halten zu lassen. Die Steuerungsvorrichtungen umfassen dabei Rechner und Speicher, die den Fahrzeugantrieb und die Lenkung entsprechend gespeicherter Daten der Bahnverläufe und Stationen beeinflussen.

Um auch langzeitig eine hohe Genauigkeit beim Einhalten der Bahnverläufe und zielsicheres Anfahren der Stationen zu gewährleisten, ist die Kenntnis der aktuellen Position notwendig. Hierzu verfügt das fahrerlose Transportsystem über eine Ortungseinrichtung, die Einrichtungen auf den zu ortenden Fahrzeugen 10, 12, 14 und drei ortsfeste Einrichtungen 16, 18, 20 umfaßt.

Zwischen den Einrichtungen auf den zu ortenden Fahrzeugen 10, 12, 14 und den ortsfesten Einrichtungen 16, 18, 20 sind Ultraschall-Signal-Übertragungsstrecken gebildet. Durch Messen der Laufzeiten der zu vorgegebenen Zeiten ausgesandten Ultraschall-Signale lassen sich die Abstände zwischen den Fahrzeuge 10, 12, 14 und den ortsfesten Einrichtungen 16, 18, 20 bestimmen und daraus die Ortskoordinaten des aktuellen Standortes des jeweiligen Fahrzeugs 10, 12, 14 berechnen.

Die ortsfesten Einrichtungen 16, 18, 20 sind an jeweils zwei Ecken und der Mitte einer Seite der Halle 60 angebracht. Dadurch lassen sich an allen möglichen Standorten eindeutige Koordinaten bestimmen. Damit der kürzeste zurückgelegte Weg des Schalls erfaßt werden kann, ist es außerdem zweckmäßig, Sender und Empfänger in einer ausreichenden Höhe zu installieren. Dadurch ist weitgehend Sichtverbindung auf der Übertragungsstrecke gewährleistet und störende Reflexionen sind praktisch ausgeschaltet.

Wenn das Fahrzeug nur einen sehr eingeschränkten Bahnverlauf beschreiben soll, können auch zwei ortsfeste Einrichtungen ausreichend sein. Umgekehrt besteht bei sehr großen, verwinkelten Hallen oder Gelänen die Notwendigkeit, mehr als drei ortsfeste Einrichtungen vorzusehen.

Für das Auslösen der Ultraschall-Signale und damit den Beginn der Messung bieten sich mehrere Alternativen an. Eine Möglichkeit, die auch in dem erläuterten Ausführungsbeispiel zur Anwendung kommt, besteht darin, zu Beginn der Laufzeitmessung elektromagnetische Startsignale von den Empfangsorten der Ultraschall-Signale aus zu übertragen. Diese werden an den Sendeorten der Ultraschall-Signale empfangen und steuern die Aussendung der Ultraschall-Signale.

Eine andere, hier jedoch nicht dargestellte Alternative sieht vor, zu Beginn der Laufzeitmessung elektromagnetische Startsignale von den Sendeorten der Ultraschall-Signale aus zu übertragen. Diese kündigen an den Empfangsorten der Ultraschall-Signale die Aussendung der Ultraschall-Signale an.

Die erste Alternative hat den Vorteil, daß die ortsfesten Einrichtungen außer einer Stromversorgung völlig autark sein können und ohne intelligente Steuerung oder interne Kommunikation auskommen. Die Steuerung der Aussendung von Ultraschall-Signalen für den Beginn der Laufzeitmessung kann vielmehr in das Fahrzeug verlagert werden, wo ohnehin schon eine intelligente Steuerung für den Antrieb und die Lenkung vorhanden ist.

Eine weitere Ausgestaltung der Erfindung ermöglicht wiederum mehrere Lösungsmöglichkeiten. So sieht eine Variante vor, daß uncodierte Ultraschall-Signale nur jeweils von einem Sender zur Zeit ausgestrahlt werden und die Sender durch unterschiedlich codierte elektromagnetische Startsignale nacheinander gestartet oder angekündigt werden.

Diese Lösung ist zwar zeitaufwendig, da in einem Meßzyklus die Aussendungen aller Ultraschall-Sender sowie das Abklingen des Schalls abgewartet werden müssen, es stellt aber nur geringe Anforderungen an die Ultraschall-Empfänger und die Auswerteschaltungen.

Bei einer anderen Varianten werden codierte Ultraschall-Signale, vorzugsweise unterschiedlicher, für jeden Sender spezifischer Frequenz gleichzeitig gestartet und die Ultraschall-Signale selektiv ausgewertet.

Es gelingt hierdurch, die Abstände zwischen den Fahrzeugen und den ortsfesten Einrichtungen gleichzeitig bestimmen und schneller aktualisieren zu können.

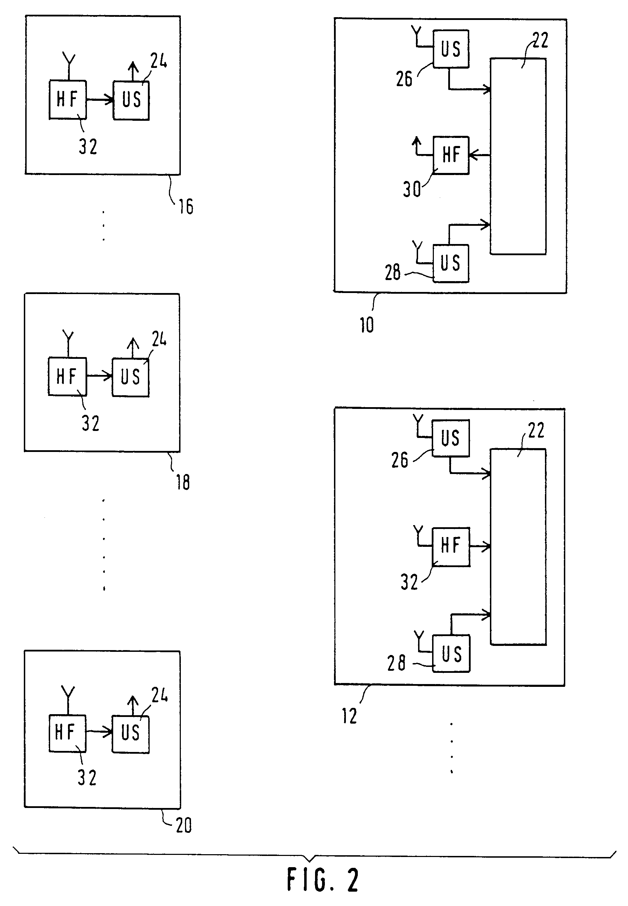

Im einzelnen ergibt sich der Aufbau der Ortungseinrichtung aus dem in Fig. 2 dargestellten Blockschaltbild. Dort sind die ortsfesten Einrichtungen 16, 18 und 20 sowie die Einrichtungen der Fahrzeuge 10 und 12 wiedergegeben.

Die ortsfesten Einrichtungen 16, 18 und 20 sind im Ausführungsbeispiel identisch aufgebaut und bestehen aus einem Sender 24 für Ultraschall-Signale und einem HF Empfänger 32 für elektromagnetische Startsignale. Erhält der Empfänger 32 ein Startsignal, so veranlaßt er unmittelbar den Sender 24 ein Ultraschall-Signal auszusenden.

Die Fahrzeuge 1∅ und 12 besitzen beide eine Steuerungs- und Auswertevorrichtung 22. Neben einer Steuerung des Antriebs und der Lenkung der Fahrzeuge 1∅ und 12 ermittelt die Steuerungs- und Auswertevorrichtung 22 auch die Laufzeiten der von Ultraschall-Empfängern 26 und 28 empfangenen Signale und berechnet über die Abstände von den ortsfesten Einrichtungen die aktuellen Positionen der Fahrzeuge 1∅ und 12.

Ein im Fahrzeug 1∅ angeordneter HF-Sender 3∅ wird ebenfalls von der Steuerungs- und Auswertevorrichtung 22 gesteuert und zwar dient dieser Sender 3∅ dazu, elektromagnetische Startsignale an die ortsfesten Einrichtungen 16, 18, 2∅ zu übermitteln.

In der dargestellten Ausführung mit mehreren Fahrzeugen 1∅, 12 werden elektromagnetische Startsignale nur von einem Leitfahrzeug, hier dem Fahrzeug 1∅, gesendet und diese Startsignale werden von den ortsfesten Einrichtungen 16, 18, 2∅ und den übrigen Fahrzeugen 12 empfangen und ausgewertet. Statt eines eigenen Senders besitzt das Fahrzeug 12 daher einen HF-Empfänger 32.

Der Vorteil dieser Ausgestaltung besteht darin, daß der Beginn der Aussendung von Ultraschall-Signalen nur von der Steuerungs- und Auswertevorrichtung 22 dieses Fahrzeugs gesteuert wird und daher zeitliche Abstimmungen oder Synchronisationen der Fahrzeuge untereinander entfallen können.

Bei jedem Fahrzeug 1∅, 12 befinden sich an den Querseiten zur Fahrzeugachse, also der Vorderseite und der Rückseite die Ultraschall-Empfänger 26, 28. Diese Empfänger 26, 28 sind also räumlich getrennt untergebracht und liefern beim Empfang von Ultraschall-Signalen unterschiedliche Feldstärken und/oder Laufzeiten. Aus diesen Angaben gelingt es, zusätzlich zur aktuellen Position auch die jeweilige Orientierung des Fahrzeugs 1∅, 12 festzustellen.

**Patentansprüche**

1. Verfahren zur Ortung von Fahrzeugen fahrerloser Transportsysteme, dadurch gekennzeichnet, daß zwischen einem oder mehreren zu ortenden Fahrzeug(en) und wenigstens zwei ortsfesten Einrichtungen zu vorgegebenen Zeiten Ultraschall-Signale übertragen und deren Laufzeiten gemessen werden und daß aus den Laufzeiten die Abstände zwischen dem Fahrzeug bzw. den Fahrzeugen und den ortsfesten Einrichtungen bestimmt und daraus die Ortskoordinaten des aktuellen Standorts des jeweiligen Fahrzeugs berechnet werden.

2. Verfahren nach Anspruch 1, dadurch gekennzeichnet, daß zu Beginn der Laufzeitmessung elektromagnetische Startsignale - vorzugsweise von dem oder den Empfangsort(en) der Ultraschall-Signale aus - übertragen werden, welche - vorzugsweise an dem Sendeort oder den Sendeorten der Ultraschall-Signale - empfangen werden und die Aussendung der Ultraschall-Signale steuern.

3. Verfahren nach Anspruch 1, dadurch gekennzeichnet, daß zu Beginn der Laufzeitmessung elektromagnetische Startsignale - vorzugsweise von dem oder den Sendeort(en) der Ultraschall-Signale aus - übertragen werden, welche - vorzugsweise an dem Empfangsort oder den Empfangsorten der Ultraschall-Signale - empfangen werden und die Aussendung der Ultraschall-Signale ankündigen.

4. Verfahren nach Anspruch 1 oder 2, dadurch gekennzeichnet, daß von dem Fahrzeug bzw. den Fahrzeugen elektromagnetische Startsignale gesendet und diese von den ortsfesten Einrichtungen empfangen werden und daß von den ortsfesten Einrichtungen Ultraschall-Signale gesendet und diese von dem Fahrzeug bzw. den Fahrzeugen empfangen werden.

5. Verfahren nach einem oder mehreren der Ansprüche 1 bis 4, dadurch gekennzeichnet, daß uncodierte Ultraschall-Signale nur jeweils von einem Sender zur Zeit ausgestrahlt werden und die Sender durch unterschiedlich codierte elektromagnetische Startsignale nacheinander gestartet oder angekündigt werden.

6. Verfahren nach einem oder mehreren der Ansprüche 1 bis 4, dadurch gekennzeichnet, daß codierte Ultraschall-Signale, vorzugsweise unterschiedlicher, für jeden Sender spezifischer Frequenz gleichzeitig gestartet werden und die Ultraschall-Signale selektiv ausgewertet werden.

7. Verfahren nach einem oder mehreren der Ansprüche 1 bis 6, dadurch gekennzeichnet, daß bei mehreren Fahrzeugen eines fahrerlosen Transportsystems elektromagnetische Startsignale nur von einem Leitfahrzeug gesendet werden und diese Startsignale von den ortsfesten Einrichtungen und den übrigen Fahrzeugen empfangen und ausgewertet werden.

8. Verfahren nach einem oder mehreren der Ansprüche 1 bis 7, dadurch gekennzeichnet, daß die Startsignale durch HF-Funksignale übertragen werden, die in Rundstrahlcharakteristik ausgestrahlt werden.

9. Verfahren nach einem oder mehreren der Ansprüche 1 bis 7, dadurch gekennzeichnet, daß die Startsignale durch Infrarotlicht-Signale übertragen werden, die in Rundstrahlcharakteristik ausgestrahlt werden.

10. Verfahren nach einem oder mehreren der Ansprüche 1 bis 9, dadurch gekennzeichnet, daß die eintreffenden Ultraschall-Signale an wenigstens zwei Seiten, vorzugsweise an den beiden Längs- und beiden Querseiten des Fahrzeugs bezogen auf die Fahrzeugachse paarweise empfangen werden und daß aus den unterschiedlichen Feldstärken und/oder Laufzeiten der Ultraschall-Signale die Orientierung des Fahrzeugs bzw. der Fahrzeuge bestimmt wird.

11. Ortungseinrichtung für Fahrzeuge fahrerloser Transportsysteme, dadurch gekennzeichnet, daß zwischen einem oder mehreren zu ortenden Fahrzeug(en) (1Ø, 12, 14) und wenigstens zwei ortsfesten Einrichtungen (16, 18, 2Ø) Ultraschall-Signal-Übertragungsstrecken angeordnet und daß Steuerungs- und Auswertevorrichtungen (22) vorgesehen sind, mittels denen zu vorgegebenen Zeiten Ultraschall-Signale übertragbar, deren Laufzeiten meßbar und aus den Laufzeiten die Abstände zwischen dem Fahrzeug bzw. den Fahrzeugen (1Ø, 12, 14) und den ortsfesten Einrichtungen (16, 18, 2Ø) bestimmbar und daraus die Ortskoordinaten des aktuellen Standortes des jeweiligen Fahrzeugs (1Ø, 12, 14) berechenbar sind.

12. Ortungseinrichtung nach Anspruch 11, dadurch gekennzeichnet, daß zusätzlich zwischen dem oder den zu ortenden Fahrzeug(en) (1Ø, 12, 14) und den ortsfesten Einrichtungen (16, 18, 2Ø) elektromagnetische Übertragungsstrecken für Startsignale vorgesehen sind.

13. Ortungseinrichtung nach Anspruch 12, dadurch gekennzeichnet, daß die Ultraschall-Signal-Übertragungsstrecken und die elektromagnetischen Übertragungsstrecken Sender umfassen, die den ortsfesten Einrichtungen (16, 18, 2Ø) zugeordnet sind, und Empfänger umfassen, die dem Fahrzeug bzw. den Fahrzeugen (1Ø, 12, 14) zugeordnet sind.

14. Ortungseinrichtung nach Anspruch 12, dadurch gekennzeichnet, zeichnet, daß die Ultraschall-Signal-Übertragungsstrecken Sender (24) umfassen, die den ortsfesten Einrichtungen (16, 18, 2Ø) zugeordnet sind und Empfänger (26, 28) umfassen, die dem Fahrzeug bzw. den Fahrzeugen (1Ø, 12, 14) zugeordnet sind und daß die elektromagnetischen Übertragungsstrecken Sender (3Ø) umfassen, die dem Fahrzeug bzw. den Fahrzeugen (1Ø, 12, 14) zugeordnet sind und Empfänger (32) umfassen, die den ortsfesten Einrichtungen (16, 18, 2Ø) zugeordnet sind.

15. Ortungseinrichtung nach einem oder mehreren der Ansprüche 11 bis 14, dadurch gekennzeichnet, daß die Sender (24) für Ultraschall-Signale alle auf die gleiche Frequenz abgestimmt sind und daß die Steuerungsvorrichtung (22) so ausgebildet ist, daß zu einem vorgegebenen Sendezeitpunkt nur jeweils ein Sender Ultraschall-Signale ausstrahlt.

16. Ortungseinrichtung nach einem oder mehreren der Ansprüche 11 bis 14, dadurch gekennzeichnet, daß die Sender (24) für Ultraschall-Signale unterschiedlich codiert, vorzugsweise auf unterschiedliche Frequenzen abgestimmt sind und daß die Empfänger (26, 28) eine selektive Auswertungsschaltung (22) umfassen.

17. Ortungseinrichtung nach einem oder mehreren der Ansprüche 11 bis 16, dadurch gekennzeichnet, daß bei mehreren Fahrzeugen (1Ø, 12, 14) eines fahrerlosen Transportsystems nur ein Leitfahrzeug (1Ø) einen Sender (3Ø) für elektromagnetische Startsignale umfaßt und die ortsfesten Einrichtungen (16, 18, 2Ø) sowie die übrigen Fahrzeuge (12, 14) Empfänger (32) für elektromagnetische Startsignale umfassen.

18. Ortungseinrichtung nach einem oder mehreren der Ansprüche 11 bis 17, dadurch gekennzeichnet, daß die Sender (3Ø) für elektromagnetische Signale als HF-Sender und die Empfänger (32) als HF-Empfänger ausgebildet sind.

19. Ortungseinrichtung nach einem oder mehreren der Ansprüche 11 bis 17, dadurch gekennzeichnet, daß die Sender (3Ø) für elektromagnetische Signale als Infrarotlicht-Sender und die Empfänger (32) als Infrarotlicht-Empfänger ausgebildet sind.

20. Ortungseinrichtung nach einem oder mehreren der Ansprüche 11 bis 19, dadurch gekennzeichnet, daß an wenigstens zwei Seiten, vorzugsweise an den beiden Längs- und beiden Querseiten des Fahrzeugs bzw. der Fahrzeuge (1Ø, 12, 14) bezogen auf die Fahrzeugachse Sensoren oder Empfänger (26, 28) für Ultraschall-Signale angeordnet sind und daß die Auswertevorrichtung so ausgebildet ist, daß aus den unterschiedlichen Feldstärken und/oder Laufzeiten der Ultraschall-Signale die Orientierung des Fahrzeugs bzw. der Fahrzeuge (1Ø, 12, 14) bestimmbar ist.

FIG.1

FIG. 2